# EUROPÄISCHE PATENTSCHRIFT

(11) **EP 0 567 726 B1**
(45) Veröffentlichungstag und Bekanntmachung des Hinweises auf die Patenterteilung: **21.06.1995**
(21) Anmeldenummer: 93101158.9
(22) Anmeldetag: 27.01.1993
(51) Int. Cl.: B01D 29/03, B01D 29/05, B01D 29/44

(54) **Siebvorrichtung**
Screening device
Dispositif de tamisage

(30) Priorität: 29.04.1992 DE 4214061
(43) Veröffentlichungstag der Anmeldung: 03.11.1993
(73) Patentinhaber: Voith Sulzer Stoffaufbereitung GmbH, 88191 Ravensburg (DE)
(72) Erfinder: Ehmcke, Wolfgang, Dipl.-Ing., W-7980 Ravensburg-Oberhofen (DE)

(56) Entgegenhaltungen:
- DE-A- 3 327 422
- DE-U- 9 108 129
- US-A- 2 129 428
- US-A- 3 716 144

## Beschreibung

Die Erfindung bezieht sich auf eine Siebvorrichtung gemäß dem Oberbegriff des Anspruchs 1. Ein bekanntes Beispiel für den Einsatz derartiger Siebvorrichtungen ist das Sortieren von Faserstoffsuspensionen. Dabei sollen die in der Suspension enthaltenen Fasern durch das Sieb hindurchtreten, während die nicht gewünschten festen Bestandteile an dem Spalt abgewiesen und aus der Siebvorrichtung wieder herausgeleitet werden. Denkbar ist auch ein Einsatz zur Trennung unterschiedlicher Faserbestandteile. Dadurch, daß die Öffnungen eine im wesentlichen längliche Form haben, also Schlitze oder Spalten sind, werden faserige Teilchen leichter durchgelassen als die kubischen, auch wenn beide Arten in ähnlicher Größenordnung vorliegen sollten. Mit einer derartigen Sortiertechnologie ist daher ein sehr guter Ausscheidungseffekt von nicht faserigen Störstoffen aus Fasersuspensionen möglich. Voraussetzung ist allerdings eine hohe Präzision der Schlitzform auf der ganzen Siebfläche.

Aus der Offenlegungsschrift DE 33 27 422 A1 sind Siebe oder Siebkörbe bekannt, bei denen die Sortierschlitze durch im wesentlichen parallele, stabartige Profile, die mit quer laufenden Halterippen verschweißt sind, gebildet werden. Auch wenn es durch dieses Fertigungsverfahren gelungen ist, die Stäbe mit den Halterippen fest zu verbinden, ist das bei der geforderten Präzision, wenn überhaupt, dann nur mit beträchtlichem Aufwand machbar. Um das Festsetzen von Fasern beim Betrieb der Siebvorrichtung zu vermeiden, müssen alle den Stoff berührenden Flächen extrem glatt sein. Nur so kann verhindert werden, daß sich Fasern dort aufbauen und früher oder später zu Verstopfung führen. Es hat zwar bereits Vorschläge gegeben, solche Schweißnähte nachträglich zu glätten oder abzudecken. Diese Maßnahmen waren aber meist geeignet, die Herstellung weiter zu verteuern.

Der Erfindung liegt die Aufgabe zugrunde, eine Siebvorrichtung der angegebenen Gattung zu schaffen, die mit wirtschaftlich günstigem Aufwand präzise herzustellen ist und in der alle die Stoff berührenden Oberflächen so glatt sind, daß die Neigung von in dem zu sortierenden Stoff enthaltenen Bestandteilen, sich dort anzuhängen, möglichst gering ist.

Diese Aufgabe wird durch die im Kennzeichen des Anspruchs 1 genannten Maßnahmen erfüllt.

In den Unteransprüchen sind vorteilhafte Ausgestaltungen der Erfindung beschrieben.

Dadurch, daß die Verbindung zwischen den Stäben und den Verstärkungselementen durch ein Hochtemperaturlötverfahren erzeugt worden ist, haben die Verbindungsstellen eine sehr glatte Oberfläche ohne störende Rauhigkeiten, Kanten oder Ecken. Es ist keine zur Rauhigkeit neigende Verbindungsmasse vorhanden. Gerade das übliche Widerstandsschweißen kann nämlich an den Schweißpunkten Grate oder Schmelzmasse mit rauher Oberfläche entstehen lassen, die dann mühsam wieder entfernt werden müssen.

Das zur Herstellung des Erfindungsgegenstandes angewandte Lötverfahren kann vorteilhaft bei hohen Temperaturen von etwa 1000 bis 1200° C und im Hochvakuum stattfinden. Die Verbindung der Materialien von Stäben und Verstärkungselementen kann dabei durch Diffusion eines Lotes in die zu verbindenden Bereiche erfolgen, was sehr hohe Festigkeit bei makelloser Oberfläche bewirkt. Wegen der ferner vorgeschlagenen Vertiefungen in den Verstärkungselementen werden die Stäbe präzise fixiert, wobei sich auch während des Befestigens ihre Lage nicht mehr ändert. Die Form des Siebes ist also dabei bereits festgelegt und wird nicht mehr verändert wie etwa bei den bekannten Walzverfahren zur Herstellung eines Siebkorbes aus einem Schlitzblech. Außerdem wird eine relativ große Kontaktfläche für das Verbinden angeboten. Zwar erfordert das genannte Lötverfahren zunächst hohe Investitionen, bei der laufenden Produktion ist es aber wegen des genannten Wegfallens von Nacharbeiten wirtschaftlich und führt bei der bestimmungsgemäßen Verwendung des Siebes zu besseren Ergebnissen.

Maßnahmen, die Stäbe in den Vertiefungen der Verstärkungselemente zu einem großen Teil verschwinden zu lassen, bewirken, daß die im Betrieb der Vorrichtung angreifenden Kräfte an den Stäben - z.B. beim "Zuschlagen" des Siebkorbes in der Papiererzeugungsanlage - ein nur geringes Biegemoment an den Verbindungsflächen hervorrufen.

Die zwischen den Stäben gebildeten Siebschlitze können im Bereich des Suspensionseintritts mit geraden parallelen Rändern versehen sein, so daß sie auch bei eventuell eingetretenem Verschleiß an dieser Stelle eine für die Sortierung wichtige unveränderte Weite haben. Ein möglicher Vorteil ist auch eine gleichbleibende Drosselwirkung beim Durchströmen der Flüssigkeit. In anderen Fällen können die Spalte sich erweitern, um dadurch die Verstopfungsneigung zu reduzieren. Auch die Kombination beider Formen ist möglich, wie später noch in den Figuren gezeigt wird. Scharfe Kanten an den der Suspensionsströmung zugewandten Flächen können gegebenenfalls die Verstopfungsgefahr an den Siebspalten vermindern helfen.

Verwendet man für die Stäbe gezogene Profile, etwa aus Stahl oder einer Stahllegierung, so sind auch spezielle Querschnittsformen wirtschaftlich und präzise erhältlich. Wird auf der der Suspensionsströmung zugewandten Seite eine scharfkantige Form gewünscht, könnte diese durch Nachschliefen eines gezogenen Profils gebildet werden. Es ist denkbar, solche Profile mit einer Beschichtung zu versehen, die z.B. die Verschleißanfälligkeit reduziert oder auch für die im Betrieb des Siebes vorbeiströmende Flüssigkeit einen geringen Strömungswiderstand bewirkt. Es wäre auch denkbar, durch Schichten mit abweisender Wirkung das Ansetzen von Suspensionsteilchen zu vermindern.

Die Erfindung wird erläutert anhand von Zeichnungen, von denen schematisch zeigen:
- Fig. 1: einen Ausschnitt des Erfindungsgegenstandes
- Fig. 2: das Ausführungsbeispiel eines Siebkorbes
- Fig. 3 und 4: je ein Ausführungsbeispiel eines Bogensiebes
- Fig. 5: das Ausführungsbeispiel eines Plattensiebes
- Fig. 6 bis 8: jeweils weitere Ausführungsformen im Detail dargestellt.

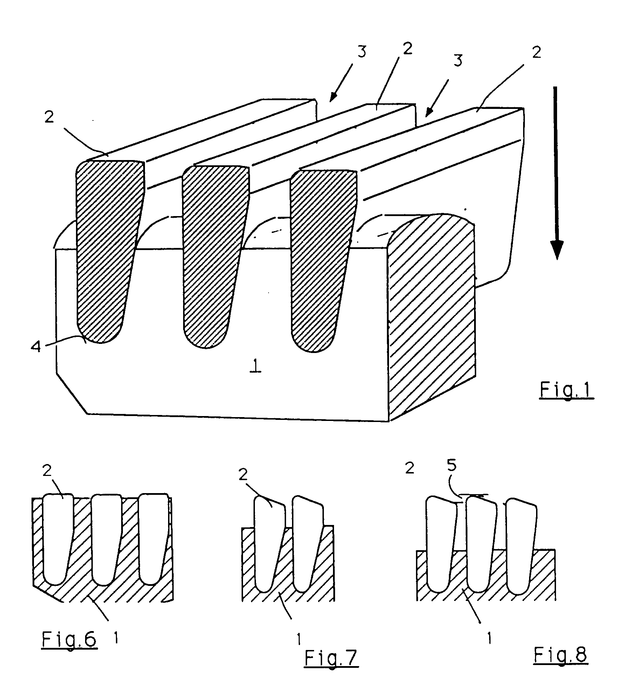

Der Ausschnitt in Fig. 1 zeigt einen Teil des Befestigungselementes 1 mit Vertiefungen 4, in die Stäbe 2 eingesetzt und darin befestigt sind. Man erkennt, daß sich durch diese Anordnung ein Schlitzsieb mit den Spalten 3 gebildet hat, durch welche in Strömungslaufrichtung (Pfeil) die zu sortierende Flüssigkeit hindurchtreten kann. Dabei werden Teile, deren Größe die freie Spaltweite überschreiten, in an sich bekannter Weise zurückgehalten und abgeführt. Die hier dargestellte Ausführungsform enthält Siebspalten 3 im Bereich des Suspensionseintritts, hier oben gezeichnet, mit im wesentlichen geraden und parallelen Wänden. Es sind aber auch andere Formen vorstellbar, wie etwa Fig. 6 bis 8 zeigen.

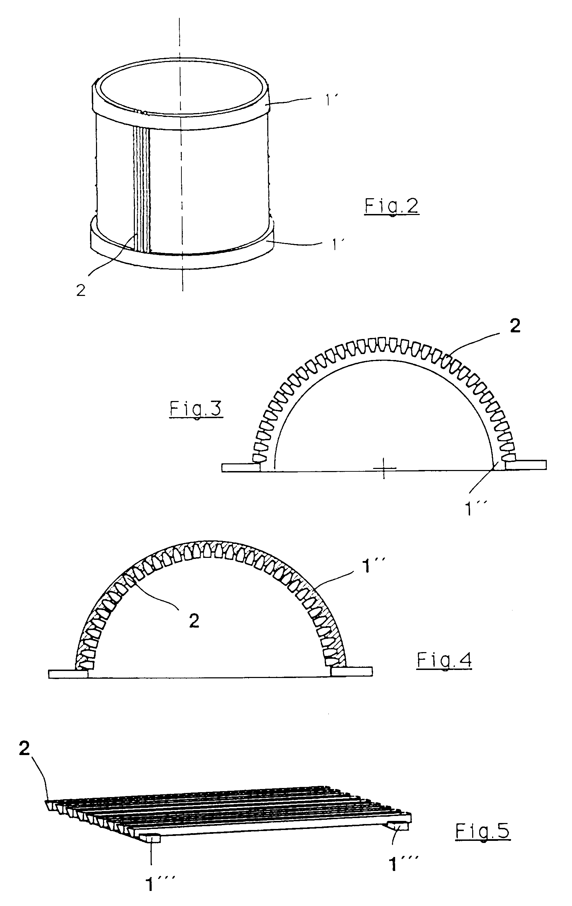

Die erfindungsgemäße Siebvorrichtung kann gemäß Abbildung 2 als zylindrischer Siebkorb ausgeführt sein, der durch zwei ringförmige Befestigungselemente 1' zusammengehalten wird. Die Darstellung zeigt nur einen Teil der vorhandenen Stäbe 2, die hier von innen in die Ringe eingesetzt sind. Je nach vorgesehener Durchströmungsrichtung können sie auch vom äußeren Durchmesser her in die Befestigungselementel 1 eingefügt sein, ähnlich wie es Figur 3 am Beispiel eines Bogensiebes mit halbringartigen Befestigungselementen 1'' zeigt. Ein schalenförmiges Bogensieb mit von innen eingesetzten Stäben wird in Fig. 3, ein ebenes Plattensieb in Fig. 4 dargestellt.

In diesem Zusammenhang ist anzumerken, daß Siebmaschinen, die Siebkörbe der Art von Abbildung 2 enthalten, erfahrungsgemäß besonders hohe Anforderungen an die Präzision der Siebspalte und an die Oberfläche der die zu sortierende Flüssigkeit berührenden Flächen stellen. Daher ist die Erfindung beim Einsatz in solchen Maschinen sehr vorteilhaft. Bei den Ausgestaltungen gemäß Fig. 3 oder 4 ist z.B. an Siebsegmente von Endstufensortierern zu denken.

Je nach Anforderungen und Fertigungsmöglichkeiten werden die Stäbe 2 tiefer oder weniger tief in das Befestigungselement 1 eingefügt sein z.Bsp. zu mindestens 40% der Tiefe der Vertiefungen. Natürlich sind auch, wie in Fig. 6 gezeigt, fast vollständig versenkte Stäbe denkbar. Diese Bauart ist auch im Bereich der Befestigungselemente 1 nur wenig verstopfungsanfällig und ermöglicht eine sichere Verbindung von Stäben 2 und Befestigungselementen 1.

Fig. 6 und 7 stellen weitere Ausführungsformen dar, bei denen die der Anströmung zugewandten Flächen der Stäbe 2 gegen die Hüllkurve geneigt sind, so daß sich Absätze 5 (Fig. 8) bilden. An dieser Stelle können mit Hilfe vorbeibewegter Räumungsflügel Wirbel erzeugt werden, die die Räumungswirkung verbessern. Mit Räumen ist gemeint, daß die abgewiesenen Teile möglichst schnell aus diesem Siebbereich entfernt werden, um die Siebfläche wieder zur weiteren Siebung anbieten zu können.

Es versteht sich, daß durch die Wahl des Stabquerschnittes und durch die Art, diesen in die Befestigungselemente einzufügen, zur Gestaltung des Sortierspaltes eine große Anzahl von Möglichkeiten gegeben ist.

## Patentansprüche

1. Siebvorrichtung mit spaltförmigen Öffnungen für das Sortieren von Faserstoffsuspensionen oder dergl. mit einer Vielzahl von im wesentlichen parallel ausgerichteten Stäben (2), zwischen denen sich die Sortierspalten (3) oder Sortierschlitze befinden und welche durch mit ihnen verbundene Verstärkungselemente (1) fixiert werden, wobei die Verstärkungselemente (1) mehrere oder alle an der Siebvorrichtung vorhandenen Stäbe (2) verbinden,
**dadurch gekennzeichnet**,
daß die Verstärkungselemente (1) Vertiefungen (4) zur Aufnahme der Stäbe (2) aufweisen und daß die Stäbe in diesen Vertiefungen durch ein Hochtemperatur-Löt- Verfahren mit den Verstärkungselementen (1) unlösbar verbunden sind.

2. Siebvorrichtung nach Anspruch 1
**dadurch gekennzeichnet**,
daß die Stäbe (2) in den Verstärkungselementen (1) durch eine Verbindung gehalten werden, bei der mindestens auf einem Teil der Kontaktfläche zwischen den Stäben (2) und den Vertiefungen (4) eine mit Lot verbundene Diffusionsschicht vorhanden ist.

3. Siebvorrichtung nach Anspruch 1 oder 2,
**dadurch gekennzeichnet**,
daß die Verstärkungselemente (1) als Ringe (1') ausgebildet sind, so daß die Siebvorrichtung ein zylindrischer Siebkorb ist.

4. Siebvorrichtung nach Anspruch 1 oder 2,
**dadurch gekennzeichnet**,
daß die Verstärkungselemente (1) als Ringsegmente (1'') ausgebildet sind, so daß die Siebvorrichtung ein Bogensieb, Halbsiebkorb oder dgl. ist.

5. Siebvorrichtung nach Anspruch 1 oder 2,
**dadurch gekennzeichnet**,
daß die Verstärkungselemente (1) als Leisten (1''') ausgebildet sind, so daß die Siebvorrichtung ein Flachsieb oder dergl. ist.

6. Siebvorrichtung nach Anspruch 1 oder 2,
**dadurch gekennzeichnet**,
daß sich die Vertiefungen (4) in den Verstärkungselementen (1) ausgehend von der mit den Vertiefungen (4) versehenen Oberfläche nach innen hin verjüngen.

7. Siebvorrichtung nach Anspruch 1 oder 2,
**dadurch gekennzeichnet**,
daß die Vertiefungen (4) in den Verstärkungselementen (1) so dimensioniert sind, daß die Stäbe im Bereich dieser Verstärkungselemente zu mindestens 40 % ihrer Tiefe darin aufgenommen werden.

8. Siebvorrichtung nach Anspruch 1 oder 2,
**dadurch gekennzeichnet**,
daß der Querschnitt der Stäbe (2) eine Form aufweist, die aus einem Polygon mit abgerundeten Kanten gebildet ist.

9. Siebvorrichtung nach Anspruch 8,
**dadurch gekennzeichnet**,
daß die Stäbe (2) so geformt und eingesetzt sind, daß die Sortierschlitze im Bereich des Suspensionseintritts einen Querschnitt mit im wesentlichen parallelen geradlinigen Rändern bilden.

10. Siebvorrichtung nach Anspruch 8,
**dadurch gekennzeichnet**,
daß der Querschnitt der Stäbe (2) eine Form aufweist, die aus einem Dreieck mit abgerundeten Kanten gebildet ist.

11. Siebvorrichtung nach Anspruch 8,
**dadurch gekennzeichnet**,
daß die Stäbe (2) so geformt und eingesetzt sind, daß die Sortierschlitze (3) einen in beabsichtigter Durchströmungsrichtung sich erweiternden Querschnitt mit im wesentlichen geradlinigen Rändern bilden.

12. Siebvorrichtung nach Anspruch 1 oder 2,
**dadurch gekennzeichnet**,
daß die auf der Zuströmseite der Fasersuspension oder dergl. liegende Fläche der Stäbe (2) gegen die Hüllkurve geneigt ist, so daß sich dort ein Absatz (5) zwischen zwei benachbarten Stäben (2) ausbildet.

13. Siebvorrichtung nach Anspruch 1 oder 2,
**dadurch gekennzeichnet**,
daß die Stäbe (2) aus einem gezogenen Profil bestehen.

14. Siebvorrichtung nach Anspruch 1, 2 oder 13,
**dadurch gekennzeichnet**,
daß die Stäbe (2) aus einem scharfkantig geschliffenen Profil bestehen.

15. Siebvorrichtung nach Anspruch 1 oder 2,
**dadurch gekennzeichnet**,
daß die Stäbe (2) mit einer verschleißfesten Beschichtung versehen sind.

16. Siebvorrichtung nach Anspruch 1 oder 2,
**dadurch gekennzeichnet**,
daß die Stäbe (2) mit einer die Strömungseigenschaften ihrer Oberfläche verbessernden Beschichtung versehen sind.

## Claims

1. A sieve device with gap-type openings for cleaning fibre suspensions or the like, comprising a plurality of bars (2) oriented substantially in parallel, between which there are located the cleaning gaps (3) or cleaning slits and which are fixed by reinforcing members (1) connected therewith, the reinforcing members (1) connecting several or all of the bars (2) on the sieve device, characterized in that the reinforcing members (1) comprise recesses (4) for accommodating the bars (2) and in that the bars in these recesses are connected unreleasably with the reinforcing members (1) by a high-temperature soldering process.

2. A sieve device according to claim 1, characterized in that the bars (2) are held in the reinforcing members (1) by a connection in which a solder-connected diffusion layer is present over at least part of the contact surface between the bars (2) and the recesses (4).

3. A sieve device according to claim 1 or claim 2, characterized in that the reinforcing members (1) are constructed as rings (1'), such that the sieve device is a cylindrical sieve basket.

4. A sieve device according to claim 1 or claim 2, characterized in that the reinforcing members (1) are constructed as ring segments (1''), such that the sieve device is an arcuate sieve, sieve half-basket or the like.

5. A sieve device according to claim 1 or claim 2, characterized in that the reinforcing members (1) are constructed as strips (1'''), such that the sieve device is a flat sieve or the like.

6. A sieve device according to claim 1 or claim 2, characterized in that the recesses (4) in the reinforcing members (1) taper inwards from the surface provided with the recesses (4).

7. A sieve device according to claim 1 or claim 2, characterized in that the recesses (4) in the reinforcing members (1) are so dimensioned that the bars are accommodated in the area of these reinforcing members by up to at least 40 % of their depth.

8. A sieve device according to claim 1 or claim 2, characterized in that the cross-section of the bars (2) is of a shape formed by a polygon with rounded edges.

9. A sieve device according to claim 8, characterized in that the bars (2) are so formed and inserted that the cleaning slits in the area of the suspension inlet form a cross-section with substantially parallel rectilinear edges.

10. A sieve device according to claim 8, characterized in that the cross-section of the bars (2) is of a shape formed by a triangle with rounded edges.

11. A sieve device according to claim 8, characterized in that the bars (2) are so formed and inserted that the cleaning slits (3) form a cross-section with substantially rectilinear edges and widening in the intended flow direction.

12. A sieve device according to claim 1 or claim 2, characterized in that the faces of the bars (2) on the feed side for the fibre suspension or the like are inclined towards the envelope curve, such that a shoulder (5) forms there between two neighbouring bars (2).

13. A sieve device according to claim 1 or claim 2, characterized in that the bars (2) comprise extruded profiles.

14. A sieve device according to claim 1, 2 or 13, characterized in that the bars (2) comprise square-edged ground profiles.

15. A sieve device according to claim 1 or claim 2, characterized in that the bars (2) are provided with a wear-resistant coating.

16. A sieve device according to claim 1 or claim 2, characterized in that the bars (2) are provided with a coating improving the flow properties of their surfaces.

## Revendications

1. Dispositif de tamisage avec des ouvertures en forme de fentes pour l'épuration de matières fibreuses en suspension ou similaires, avec un grand nombre de barreaux (2) sensiblement parallèles entre lesquels se trouvent les fentes d'épuration (3) et qui sont fixés par des éléments de renfort (1) reliés à ceux-ci, les éléments de renfort (1) reliant plusieurs ou tous les barreaux (2) existants au dispositif de tamisage, caractérisé en ce que les éléments de renfort (1) présentent des creux (4) destinés à loger les barreaux (2) et en ce que les barreaux sont reliés, de manière inamovible avec les éléments de renfort (1), dans ces creux, par un procédé de brasage à haute température.

2. Dispositif de tamisage selon la revendication 1, caractérisé en ce que les barreaux (2) sont maintenus dans les éléments de renfort (1) par un assemblage dans lequel au moins une couche de diffusion assemblée par brasage, se trouve sur une partie de la surface de contact entre les barreaux (2) et les creux (4).

3. Dispositif de tamisage selon les revendications 1 ou 2, caractérisé en ce que les éléments de renfort (1) sont des anneaux (1'), de sorte que le dispositif de tamisage est un panier cylindrique.

4. Dispositif de tamisage selon les revendications 1 ou 2, caractérisé en ce que les éléments de renfort (1) sont des segments d'anneau (1''), de sorte que le dispositif de tamisage est un tamis en arc, un demi-panier ou similaire.

5. Dispositif de tamisage selon les revendications 1 ou 2, caractérisé en ce que les éléments de renfort (1) sont des baguettes (1'''), de sorte que le dispositif de tamisage est un tamis plat ou similaire.

6. Dispositif de tamisage selon les revendications 1 ou 2, caractérisé en ce que les creux (4) des éléments de renfort (1) se rétrécissent vers l'intérieur, à partir de la surface pourvue des creux (4).

7. Dispositif de tamisage selon les revendications 1 ou 2, caractérisé en ce que les creux (4) des éléments de renfort (1) ont des dimensions telles que les barreaux sont logés à l'intérieur de ceux-ci dans la région de ces éléments de renfort sur au moins 40 % de leur profondeur.

8. Dispositif de tamisage selon les revendications 1 ou 2, caractérisé en ce que la section transversale des barreaux (2) a la forme d'un polygone avec bords arrondis.

9. Dispositif de tamisage selon la revendication 8, caractérisé en ce que les barreaux (2) ont une forme et sont insérés de manière que les fentes d'épuration ont, dans la région de l'entrée de la suspension, une section transversale avec des bords rectilignes sensiblement parallèles.

10. Dispositif de tamisage selon la revendication 8, caractérisé en ce que la section transversale des barreaux (2) a la forme d'un triangle à bords arrondis.

11. Dispositif de tamisage selon la revendication 8, caractérisé en ce que les barreaux (2) ont une forme et sont insérés de manière que les fentes d'épuration (3) forment une section transversales s'élargissant dans le sens voulu de l'écoulement, avec des bords sensiblement rectilignes.

12. Dispositif de tamisage selon les revendications 1 ou 2, caractérisé en ce que la surface des barreaux (2), située sur le côté arrivée des fibres en suspension ou similaires, est inclinée vers l'enveloppante, de sorte qu'il se forme un retrait (5) entre deux barreaux (2) voisins.

13. Dispositif de tamisage selon les revendications 1 ou 2, caractérisé en ce que les barreaux (2) sont réalisés dans un profilé étiré.

14. Dispositif de tamisage sel on les revendications 1, 2 ou 13, caractérisé en ce que les barreaux (2) sont réalisés dans un profilé poli à arêtes vives.

15. Dispositif de tamisage selon les revendications 1 ou 2, caractérisé en ce que les barreaux (2) sont pourvus d'un revêtement résistant à l'usure.

16. Dispositif de tamisage selon les revendications 1 ou 2, caractérisé en ce que les barreaux (2) sont pourvus d'un revêtement améliorant les propriétés d'écoulement de leur surface.
